# EUROPÄISCHE PATENTSCHRIFT

(11) **EP 1 334 893 B1**
(45) Veröffentlichungstag und Bekanntmachung des Hinweises auf die Patenterteilung: **14.09.2005**
(21) Anmeldenummer: 03001912.9
(22) Anmeldetag: 30.01.2003
(51) Int. Cl.: B60T 8/44, B60T 8/40

(54) **Elektrohydraulische Fahrzeugbremsanlage**
Electro-hydraulic vehicle braking system
Système de freinage électro-hydraulique de véhicule

(30) Priorität: 11.02.2002 DE 10205616
(43) Veröffentlichungstag der Anmeldung: 13.08.2003
(73) Patentinhaber: ROBERT BOSCH GMBH, 70442 Stuttgart (DE)
(72) Erfinder: Vollert, Herbert, 71665 Vaihingen/Enz (DE); Schanzenbach, Matthias, 74246 Eberstadt (DE); Kant, Bernhard, 71717 Beilstein (DE); Kunz, Michael, 70569 Stuttgart (DE)

(56) Entgegenhaltungen:
- EP-A- 0 210 421
- EP-A- 0 317 182
- EP-A- 0 436 926
- DE-A- 3 317 629
- DE-A- 3 424 912
- DE-A- 4 340 467
- DE-A- 19 636 432
- DE-A- 19 701 070

## Beschreibung

### Stand der Technik:

Die Erfindung geht aus von einer elektrohydraulischen Fahrzeugbremsanlage entsprechend der Gattung des Anspruchs 1. Eine derartige Fahrzeugbremsanlage ist beispielsweise aus der DE 197 01 070 A1 bereits bekannt. Diese bekannte Fahrzeugbremsanlage umfasst eine durch Fremdkraft betätigbare Betriebsbremsanlage und eine muskelkraftbetätigte Hilfsbremsanlage für den Fall eines möglichen Ausfalls der elektrohydraulischen Betriebsbremsanlage. Die elektrohydraulische Betriebsbremsanlage besteht aus einem Druckerzeuger und einem Druckspeicher, die über ein Bremsdruckaufbauventil mit einer Radbremse in Reihe geschaltet sind. Der Bremskraftwunsch des Fahrers wird von einer Betätigungseinheit erfaßt und in ein elektrisches Signal gewandelt. Dieses Signal wird in einem elektronischen Steuergerät verarbeitet zu einem Ansteuersignal für das elektronisch ansteuerbare Bremsdruckaufbauventil. Der Radbremse ist ferner ein ebenfalls elektronisch ansteuerbares Bremsdruckabsenkventil nachgeschaltet, um den Bremsdruck an der Radbremse während eines Bremsvorgangs zu regeln. Eine unmittelbare Wirkverbindung zwischen der Betätigungseinheit und der Radbremse besteht bei funktionstüchtiger elektrohydraulischer Betriebsbremsanlage demnach nicht.

Ebenfalls mit der Radbremse gekoppelt ist die durch Muskelkraft betätigbare Hilfsbremsanlage, welche auf mindestens eine Achse wirkt und durch ein Trennventil von der Betätigungseinheit getrennt ist, solange die elektrohydraulische Betriebsbremsanlage bestimmungsgemäß arbeitet. Erst im Fehlerfall stellt dieses Trennventil eine hydraulische Verbindung zwischen der Betätigungseinheit und der Radbremse her, so daß der vom Fahrer über das Bremspedal in der Betätigungseinheit aufgebrachte Bremsdruck direkt an der Radbremse anliegt.

Ein wesentlicher Vorteil derartiger elektrohydraulischer Fahrzeugbremanlagen besteht darin, daß auf einen Unterdruckbremskraftverstärker verzichtet werden kann und daß über das elektronische Steuergerät die wirksame Bremskraft radindividuell verteilt und den Fahrzuständen des Fahrzeugs angepaßt werden kann, ohne daß der Fahrer den ablaufenden Regelvorgang wahrnimmt.

Mit derartigen elektrohydraulischen Fahrzeugbremsanlagen können zukünftig auch sogenannte Sonderschutzfahrzeuge ausgestattet werden. Sonderschutzfahrzeuge sind auf Großserienfahrzeugen basierende Fahrzeuge, die aufgrund von Sonderausstattungen beispielsweise gegen Sprengstoffanschläge oder gegen Waffenbeschuß geschützt sind. Diese Schutzmaßnahmen erhöhen jedoch das Fahrzeuggewicht. Um derartige Fahrzeuge abbremsen zu können sind gegenüber den Serienfahrzeugen leistungsfähigere Radbremsen erforderlich, welche durch eine deutlich höhere Bremsflüssigkeitsvolumenaufnahme gekennzeichnet sind. Bei ordnungsgemäßer Funktion der elektrohydraulischen Betriebsbremsanlage stellt das höhere Fahrzeuggewicht und der größere Bremsflüssigkeitsvolumenbedarf kein Problem bei der Abbremsung des Fahrzeugs dar. Im Fehlerfall allerdings ist die bekannte muskelkraftbetätigte Hilfsbremsanlage nicht imstande die gesetzlich geforderte Hilfsbremswirkung zu erreichen, weil das maximale von der Betätigungseinheit verdrängbare Bremsflüssigkeitsvolumen nicht ausreicht um den notwendigen Bremsdruck aufzubauen. Aufgrund des Bedarfs an solchen Sonderschutzfahrzeugen ist eine speziell dafür vorgesehene Auslegung einer elektrohydraulischen Fahrzeugbremsanlage unwirtschaftlich.

### Vorteile der Erfindung:

Demgegenüber weist eine erfindungsgemäße elektrohydraulische Fahrzeugbremsanlage mit den Merkmalen des Anspruchs 1 den Vorteil auf, daß die gesetzlichen Forderungen bezüglich der Bremswirkung der mukelkraftbetätigten Hilfsbremsanlage bei einem Ausfall der elektrohydraulischen Betriebsbremsanlage auch für Fahrzeuge mit besonders hohem Bremsflüssigkeitsvolumenbedarf, wie insbesondere bei sogenannten Sonderschutzfahrzeugen, erreicht werden kann. Die hydraulische Auslegung einer bekannten elektrohydraulischen Fahrzeugbremsanlage kann dabei im wesentlichen unverändert beibehalten werden, so daß die vorgeschlagene Lösung besonders kosten- und bauraumgünstig ist. Zudem eröffnen die vorgeschlagenen Maßnahmen grundsätzlich die Möglichkeit einer nachträglichen Umrüstung von Fahrzeugen zu Sonderschutzfahrzeugen.

Weitere Vorteile oder vorteilhafte Weiterbildungen der Erfindung ergeben sich aus den Unteransprüchen und der Beschreibung.

### Zeichnung:

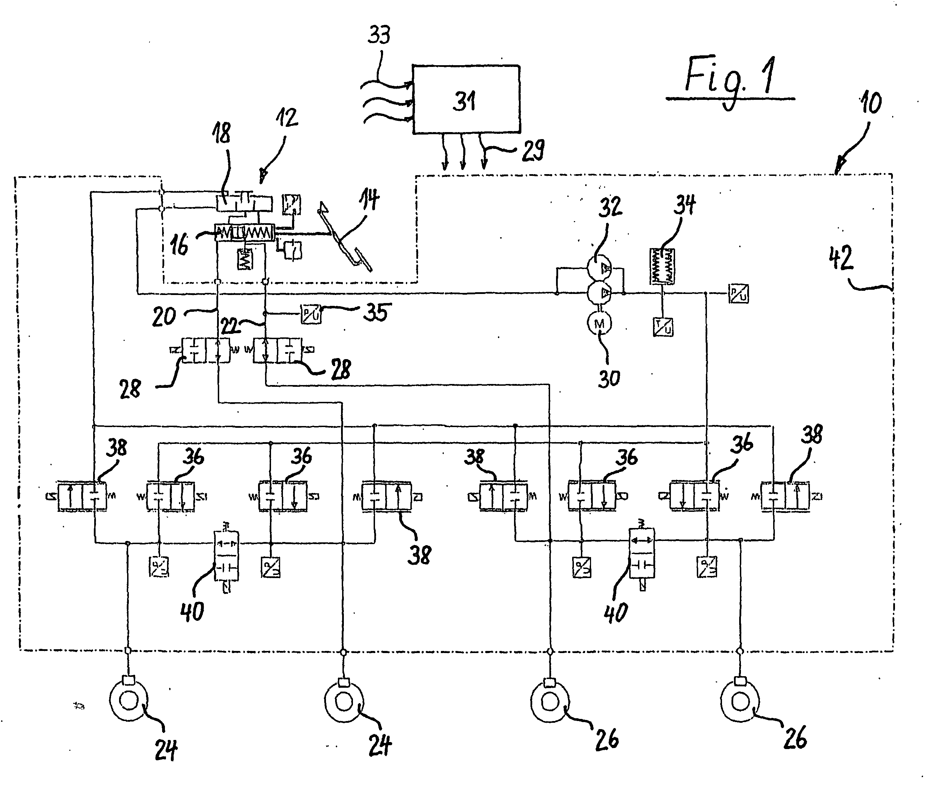

Ein Ausführungsbeispiel der Erfindung ist in der Zeichnung dargestellt und in der nachfolgenden Beschreibung näher erläutert. Figur 1 zeigt in Form eines Hydraulikschaltplans den Aufbau einer aus dem Stand der Technik bekannten elektrohydraulischen Fahrzeugbremsanlage.

In Figur 2 ist die Erfindung schematisch vereinfacht als Blockschaltbild dargestellt;

Figur 3 zeigt ebenfalls vereinfacht die erfindungsgemäß einzusetzenden Mittel zur Volumenerhöhung im Längsschnitt.

### Beschreibung des Ausführungsbeispiels:

Die in Figur 1 in Form eines Hydraulikschaltplans dargestellte elektrohydraulische Fahrzeugbremsanlage 10 ist im wesentlichen aus der DE 197 01 070 A1 bekannt. Bezüglich Detailinformationen zu dieser Fahrzeugbremsanlage 10 wird deshalb auf diese Druckschrift verwiesen; für das Verständnis der vorliegenden Erfindung reicht es aus, den Aufbau dieser Fahrzeugbremsanlage anhand ihrer wesentlichen Bautelemente zu erläutern.

Die an sich bekannte Fahrzeugbremsanlage 10 umfaßt eine Betätigungseinheit 12 mit einem Bremspedal 14 und einem Hauptbremszylinder 16. An diesen Hauptbremszylinder 16 ist unter anderem ein Vorratsbehälter 18 für Bremsflüssigkeit angeschlossen. Zudem sind zwei Anschlüsse für zwei voneinander unabhängige Bremskreise 20, 22 einer muskelkraftbetätigten Hilfbremsanlage vorhanden. Im Ausführungsbeispiel versorgt ein erster Bremskreis 20 die Radbremsen 24 der Vorderachse und ein zweiter Bremskreis 22 die Radbremsen 26 der Hinterachse eines Fahrzeugs mit Bremsflüssigkeit, wobei die Aufteilung der Bremskreise 20, 22 für die vorliegende Erfindung nicht zwangsweise in dieser Form erfolgen muß.

Jeder Bremskreis 20, 22 ist mit einem elektronisch ansteuerbaren Trennventil 28 ausgestattet. Das Ansteuersignal 29 für das Trennventil 28 wird von einem elektronischen Steuergerät 31 berechnet, welches dieser Berechnung Eingangsgrößen 33, wie unter anderem den Druck im Hauptbremszylinder 16 zugrunde legt. Diese Eingangsgrößen 33 werden durch entsprechende Sensoren 35 erfaßt und an das Steuergerät 31 weitergeleitet. Beim Trennventil 28 handelt es sich um ein 2/2-Schaltventil, das von einer Rückstellfeder im nicht bestromten Zustand in seiner Offenstellung gehalten wird. Bei ordnungsgemäßer Funktion der elektrohydraulischen Betriebsbremsanlage werden die Trennventile 28 elektronisch angesteuert und unterbrechen somit die hydraulische Verbindung vom Hauptbremszylinder 16 zu den Radbremsen 24. Die Hilfsbremsanlage ist in diesem Fall ohne Funktion.

Die elektrohydraulische Betriebsbremsanlage umfaßt einen von einem Elektromotor 30 angetriebenen Druckerzeuger 32, welcher Druckmittel aus dem Vorratsbehälter 18 ansaugt und in einen Druckspeicher 34 fördert. Dem Druckspeicher 34 nachgeschaltet sind die Bremsdruckaufbauventile 36 der verschiedenen Radbremsen 24, 26. Diese Bremsdruckaufbauventile 36 sind stromlos geschlossen und werden proportional zum Ansteuersignal 29 des Steuergeräts 31 geöffnet, um an der jeweils zugeordneten Radbremse 24, 26 den notwendigen Bremsdruck aufzubauen. Darüber hinaus ist jeder Radbremse 24, 26 ein Bremsdruckabsenkventil 38 nachgeschaltet, welches ebenfalls durch entsprechende elektronische Ansteuerung stufenlos geöffnet werden kann. Von den Bremsdruckabsenkventilen 38 führt eine Bremsleitung zurück zum Vorratsbehälter 18. Zwischen den einzelnen Radbremsen 24 und 26 der Vorder- beziehungsweise der Hinterachse ist jeweils noch ein Achsventil 40 eingebaut, welches, ebenfalls elektronisch ansteuerbar, eine zwischen der linken und der rechten Radbremse 24, 26 einer Fahrzeugachse bestehende Verbindung freigibt oder sperrt. Dadurch sind die einzelnen Radbremsen 24, 26 einer Achse auch getrennt voneinander regelbar.

Die Trennventile 28 der Hilfsbremsanlage, der Elektromotor 30 und der Druckerzeuger 32 der elektrohydraulischen Betriebsbremsanlage sowie die Bremsdruckaufbau-, die Bremsdruckabsenk-, die Achsventile 36, 38, 40 und ihre Druckmittelverbindungen sind gemeinsam in einem sogenannten Hydroaggregat 42 angeordnet. Vom Hydroaggregat 42 führen Bremsleitungen zu den verschiedenen Radbremsen 24, 26. Im Blockschaltbild ist das Hydroaggregat 42 durch eine strichpunktierte Umrißlinie veranschaulicht.

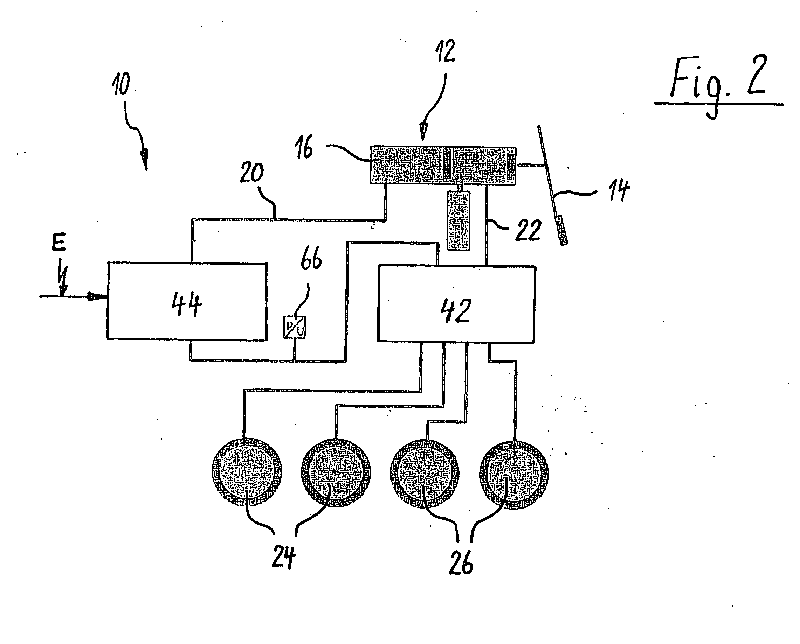

Figur 2 zeigt eine erfindungsgemäß weitergebildete Fahrzeugbremsanlage 10 als Blockschaltbild, wie sie insbesondere für den Einsatz in Sonderschutzfahrzeugen geeignet ist. Für Bauteile, die denen der Figur 1 entsprechen wurden in Figur 2 die selben Positionsnummern verwendet. Diese Fahrzeugbremsanlage 10 unterscheidet sich von der bekannten, Fahrzeugbremsanlage nach Figur 1 dadurch, daß zwischen der Betätigungseinheit 12 und dem Hydroaggregat 42 der Fahrzeugbremsanlage 10 Mittel zur Volumenerhöhung 44 des von der Betätigungseinheit 12 verdrängbaren Bremsflüssigkeitsvolumens vorgesehen sind. Diese Mittel 44 sind in der dargestellten Ausführung der Fahrzeugbremsanlage 10 nur in einem Bremskreis der Hilfsbremsanlage vorgesehen. Dabei handelt es sich vorzugsweise um den der Vorderachse zugeordneten Bremskreis. Grundsätzlich wäre es jedoch vorstellbar alle vorhandenen Bremskreise eines Fahrzeugs mit derartigen Mitteln 44 auszurüsten.

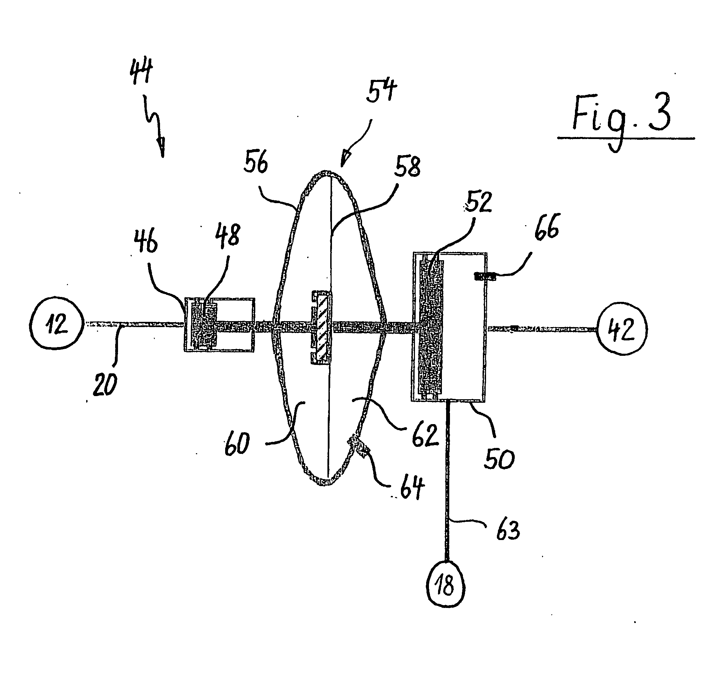

Die vorgeschlagenen Mittel 44 erlauben es trotz verschieben eines nur kleinen Volumens an Bremsflüssigkeit in der Betätigungseinheit 12 durch den Fahrer, den Radbremsen 24, 26 ein ausreichend großes Bremsflüssigkeitsvolumen zur Verfügung zu stellen, um die gesetzlichen Anforderungen bezüglich der Bremsleistung zu erfüllen. Erfindungsgemäß herrscht am Eingang der Mittel zur Volumenerhöhung 44 im wesentlichen das selbe Druckniveau als am Ausgang; das heißt es findet keine Druckerhöhung statt. Die vorgeschlagenen Mittel 44 sind nicht pedalgebunden; gemäß dem Ausführungsbeispiel nach Figur 3 erfolgt ihre Betätigung hydraulisch.

Da die vorgeschlagenen Mittel zur Volumenerhöhung 44 zwischen der Betätigungseinheit 12 und dem Hydroaggregat 42 der elektrohydraulischen Fahrzeugbremsanlage 10 angeordnet sind entfalten sie lediglich Wirkung, wenn die Trennventile 28 des betreffenden Bremskreises geöffnet sind, das heißt wenn keine elektronische Ansteuerung dieser Trennventile 28 erfolgt. Dies ist bei Ausfall der elektrohydraulischen Betriebsbremsanlage der Fall. Bei geschlossenen Trennventilen 28, also bei funktionstüchtiger elektrohydraulischer Betriebsbremsanlage, werden die vorgeschlagenen Mittel 44 und die Hilfsbremskreise nicht durchströmt und sind demnach wirkungslos.

Wie bereits erläutert besteht bei ausgefallener elektrohydraulischer Betriebsbremsanlage über die Trennventile 28 eine direkte Wirkverbindung zwischen dem Hauptbremszylinder 16 und den Radbremsen 24 der Vorderachse (Figur 1). Aufgrund der Mittel zur Volumenerhöhung 44 wird dabei im Ausführungsbeispiel dem Bremskreis der Vorderachse ein Vielfaches des in der Betätigungseinheit 12 verdrängten Volumens an Bremsflüssigkeit zur Verfügung gestellt.

Gemäß Figur 3 bestehen die vorgeschlagenen Mittel zur Volumenerhöhung 44 dazu aus einem Primärzylinder 46, in dem ein im Durchmesser kleiner erster Kolben 48 angeordnet ist, einem Sekundärzylinder 50 mit einem im Durchmesser größeren zweiten Kolben 52 und einem zwischen beiden Zylindern 46, 50 angeordneten Kraftverstärker 54 an sich herkömmlich bekannter Bauart (siehe beispielsweise ATE-Bremsenhandbuch; Autohausverlag GmbH München; Auflage 9.1; ab Seite 88). Der vorgeschlagene Kraftverstärker 54 hat ein nach außen abgeschlossenes Gehäuse 56, dessen Innenraum vorzugsweise mittels einer Membran 58 in eine Primärkammer 60 und eine davon abtrennbare Sekundärkammer 62 aufgeteilt ist. Der kleinere Kolben 48 des vorgesehenen Primärzylinders 46 ist dabei starr mit der Primärkammer 60 des Kraftverstärkers 54 und der große Kolben 52 des Sekundärzylinders 50 ist starr mit der Sekundärkammer 62 gekoppelt. Der vorgeschlagene Kraftverstärker 54 arbeitet demnach nicht pedalgebunden sondern wird hydraulisch betätigt. Zwischen den Kolben 48, 52 des Primär- und des Sekundärzylinders 46, 50 besteht eine Wirkverbindung, die es erlaubt Hubbewegungen des primärseitigen Kolbens 48 direkt auf den sekundärseitigen Kolben 52 zu übertragen, ohne daß jedoch der primärseitige Kolben 48 aufgrund im System vorgesehener Elastizitäten den Hubbewegungen des sekundärseitigen Kolbens 52 folgen muß.

Davon abgesehen weist die Sekundärkammer 62 des Kraftverstärkers 54 einen Anschluß 64 auf, an den vorzugsweise eine Unterdruck führende Leitung, beispielsweise vom Saugrohr des Verbrennungsmotors des mit der erfindungsgemäßen Fahrzeugbremsanlage 10 ausgestatteten Fahrzeugs, anschließbar ist. Eine in Figur 3 nicht erkennbare Ventileinrichtung, welche zwischen die Primärkammer 60 und die Sekundärkammer 62 des Kraftverstärkers 54 geschaltet ist, ermöglicht bedarfsabhängig die Darstellung einer Druckdifferenz zwischen beiden Kammern 60, 62. Desweiteren steht der vorgesehene Sekundärzylinder 50 über eine Leitung 63 mit dem Vorratsbehälter 18 für Bremsflüssigkeit in Verbindung. Diese Verbindung kann zum Beispiel durch ein sogenanntes Zentralventil (in Figur 1 nicht dargestellt) mit Anschluß zum Vorratsbehälter 18 realisiert sein. Dieser Hydraulikanschluß des Sekundärzylinders 50 wird durch die Bewegung des zweiten, durchmessergrößeren Kolbens 52 gesteuert.

Der Primärzylinder 46 ist an die Betätigungseinheit 12 der Fahrzeugbremsanlage 10 angeschlossen, während der Sekundärzylinder 50 mit dem Anschluß des Hydroaggregats 42 verbunden ist, über den die Druckmittelversorgung der Radbremsen 24 der Vorderachse erfolgt.

Die beschriebenen Mittel zur Volumenerhöhung 44 funktionieren wie folgt:

Bei Beaufschlagung der Betätigungseinheit 12 der Fahrzeugbremsanlage 10 durch den Fahrer über das Bremspedal 14 wird ein relativ kleines Volumen an Bremsflüssigkeit in den Primärzylinder 46 verschoben, wodurch der im Durchmesser kleinere erste Kolben 48 eine Hubbewegung ausführt. Aufgrund der quasistarren mechanischen Verbindung zwischen erstem und zweitem Kolben 48, 52 über den Kraftverstärker 54 legt der zweite Kolben 52 des Sekundärzylinders 50 den selben Weg zurück, verdrängt dabei jedoch aufgrund seiner größeren Kolbenfläche ein Vielfaches des in den primärseitigen Kolben 48 einströmenden Volumens. Die hierfür notwendige Erhöhung der auf den zweiten Kolben 52 einwirkenden Kraft wird durch Zufuhr externer Energie E (Figur 2), im Ausführungsbeispiel durch den vom Verbrennungsmotor erzeugten Unterdruck, in die Sekundärkammer 62 des Kraftverstärkers 54 aufgebracht. In der davon abgetrennten Primärkammer 60 herrscht Atmosphärendruck, so daß über die Höhe der anliegenden Druckdifferenz der wirksame Verstärkungsfaktor des Kraftverstärkers 54 festlegbar ist. Ein Druckaufbau im Sekundärzylinder 50 erfolgt jedoch erst, nachdem der größere zweite Kolben 52 den Anschluß des Sekundärzylinders 50 an den Vorratsbehälter 18 überfahren hat.

Die Durchmesser von erstem und zweiten Kolben 48, 52 sind erfindungsgemäß derart dimensioniert, daß Ihr Flächenverhältnis im wesentlichen dem Kehrwert des vom Kraftverstärker 54 bereitgestellten Verstärkungsfaktors entspricht. Damit wirken die vorgeschlagenen Mittel 44 als reine Volumenverstärker - eine Druck- oder Kraftverstärkung findet nicht statt. Damit ändert sich gegenüber der in Figur 1 dargestellten Fahrzeugbremsanlage 10 auch an der vom Fahrer aufzubringenden Betätigungskraft nichts, obwohl ein um ein Vielfaches höheres Verdrängungsvolumen auf der Sekundärseite des Kraftverstärkers 54 breitgestellt wird. Bei einer derartigen Auslegung lassen sich auch Fahrzeuge mit erhöhtem Bedarf an verdrängbarem Bremsflüssigkeitsvolumen noch durch Fußkraft mit der gesetzlich geforderten Verzögerung abbremsen.

Im beschriebenen Ausführungsbeispiel wird die vom Fahrer aufgebracht Fußkraft unterstützt durch den Unterdruck des Verbrennungsmotors - das System arbeitet also pneumatisch unterstützt. Ebenso vorstellbar wäre jedoch auch eine hydraulische oder elektrische Unterstützung. Dabei kann zudem zwischen einer elektrischen, pneumatischen oder hydraulischen Bereitstellung der externen Energie E gewählt werden. So wäre es beispielsweise denkbar elektrische Energie einzusetzen, um einen hydraulischen oder pneumatischen Druckerzeuger anzutreiben, der dann den Kraftverstärker 54 über dessen Anschluß 64 mit entsprechendem Druckmedium versorgt. Ferner wären rein elektrisch arbeitende Systeme denkbar. Allerdings müßte in diesen Fällen sichergestellt sein, daß trotz Ausfall der elektrohydraulischen Betriebsbremsanlage im Fahrzeug das elektrische Bordnetz nach wie vor zur Verfügung steht.

In einer Weiterbildung der Erfindung ließe sich durch Einsatz eines zusätzlichen Drucksensors 66 auf der Sekundärseite des Kraftverstärkers 54 zudem die Funktion der vorgeschlagenen Mittel 44 während der Funktionsphase der elektrohydraulischen Betriebsbremsanlage überwachen. Hintergrund dieses Vorschlags ist, daß die Kraftverstärkung der vorgeschlagenen Mittel 44 abhängig ist vom Maß der zugeführten externen Energie E und somit auslegungsbedingt feststeht. Ferner liegt im elektronischen Steuergerät 31 der elektrohydraulischen Fahrzeugbremsanlage 10 über zumindest einen Sensor 35 im Hauptbremszylinder 16 der primärseitige Bremsdruck als maßgebliche Steuergröße zur Regelung eines Bremsvorgangs vor. Anhand einer bloßen Rechenoperation im elektronischen Steuergerät 31 ließe sich die Plausibilität zwischen dem primärseitigen Druck im Hauptbremszylinder 16 und dem Druck im Sekundärzylinder 50 überprüfen und damit etwaige Funktionsfehler der vorgeschlagenen Mittel 44 aufdecken. Eventuelle Unplausibilitäten könnten ohne weiters dem Fahrer mitgeteilt werden.

## Patentansprüche

1. Elektrohydraulische Fahrzeugbremsanlage (10) mit einer Betätigungseinheit (12), einer durch Fremdkraft betätigbaren elektrohydraulischen Betriebsbremsanlage und einer durch Muskelkraft betätigbaren Hilfsbremsanlage, wobei im Falle der Hilfsbremsanlage die Betätigungseinheit (12) über ein Trennventil (28) an mindestens eine Radbremse (24, 26) angeschlossen ist und wobei die elektrohydraulische Betriebsbremsanlage einen extern angetriebenen Druckerzeuger (32), einen nachgeschalteten Druckspeicher (34) und ein über ein elektronisches Steuergerät (31) ansteuerbares Bremsdruckaufbauventil (36) umfaßt, das ebenfalls mit der Radbremse (24, 26) verbunden ist und wobei ein ebenfalls elektronisch ansteuerbares Bremsdruckabsenkventil (38) einer Radbremse (24, 26) hydraulisch nachgeordnet ist, **dadurch gekennzeichnet, dass** die Hilfsbremsanlage der Fahrzeugbremsanlage (10) Mittel zur Volumenerhöhung (44) des von der Betätigungseinheit (12) verdrängbaren Volumens an Bremsflüssigkeit aufweist, die der Betätigungseinheit (12) der Fahrzeugbremsanlage (10) hydraulisch nachgeschaltet sind, dass die Mittel zur Volumenerhöhung (44) einen Primärzylinder (46) mit einem im Außendurchmesser kleineren Kolben (48), einen Sekundärzylinder (50) mit einem im Außendurchmesser größeren Kolben (52) und einen zwischen den beiden Zylindern (46, 50) geschalteten Kraftverstärker (54) aufweisen, wobei der Kolben (48) des Primärzylinders (46) unter Zufuhr externer Energie (E) an den Kraftverstärker (54) den Kolben (52) des Sekundärzylinders (50) betätigt und dass das Flächenverhältnis zwischen dem kleineren Kolben (48) des Primärzylinders (46) und dem größeren Kolben (52) des Sekundärzylinders (50) dem Kehrwert der vom Kraftverstärker (54) aufgebrachten Kraftverstärkung entspricht.

2. Elektrohydraulische Fahrzeugbremsanlage nach Anspruch 1, **dadurch gekennzeichnet, dass** die Mittel zur Volumenerhöhung (44) zumindest in dem die Radbremsen (24) der Vorderachse eines Fahrzeugs beaufschlagenden Bremskreis der Hilfsbremsanlage angeordnet sind.

3. Elektrohydraulische Fahrzeugbremsanlage nach Anspruch 1 oder 2, **dadurch gekennzeichnet, dass** die Übertragung der dem Kraftverstärker (54) zugeführten externen Energie (E) auf pneumatischem Weg erfolgt.

4. Elektrohydraulische Fahrzeugbremsanlage nach einem der Ansprüche 1 bis 3, **dadurch gekennzeichnet, dass** die Fahrzeugbremsanlage (10) für den Einsatz in Sonderschutzfahrzeugen vorgesehen ist.

5. Elektrohydraulische Fahrzeugbremsanlage nach einem der Ansprüche 1 bis 4, **dadurch gekennzeichnet, dass** zur Überwachung der Funktionsfähigkeit der Mittel zur Volumenerhöhung (44) Drucksensoren (66) zur Erfassung des Druckniveaus auf der Eingangsseite und auf der Ausgangsseite der Mittel (44) vorgesehen sind.

## Claims

1. Electrohydraulic vehicle brake system (10) having an activation unit (12), an electrohydraulic service brake system which can be actuated by an extraneous force and an auxiliary brake system which can be actuated by muscle force, wherein in the case of the auxiliary brake system the activation unit (12) is connected to at least one wheel brake (24, 26) via a separating piston (28), and wherein the electrohydraulic service brake system comprises an externally driven pressure generator (32), a pressure accumulator (34) connected downstream and a brake pressure increasing valve (36) which can be actuated by means of an electronic control device (31) and which is also connected to the wheel brake (24, 26), and wherein a brake pressure reducing valve (38) which can also be actuated electronically is arranged hydraulically downstream of a wheel brake (24, 26), **characterized in that** the auxiliary brake system of the vehicle brake system (10) has means (44) for increasing the volume of the volume of brake fluid which can be expelled by the activation unit (12), which means is connected hydraulically downstream of the activation unit (12) of the vehicle brake system (10), **in that** the means (44) for increasing the volume have a primary cylinder (46) with a piston (48) which has a smaller external diameter, a secondary cylinder (50) with a piston (52) which has a larger external diameter and a booster (54) which is connected between the two cylinders (46, 50), wherein the piston (48) of the primary cylinder (46) activates the piston (52) of the secondary cylinder (50) by supplying external energy (E) to the booster (54), and **in that** the ratio of the service area of the smaller piston (48) of the primary cylinder (46) to that of the larger piston (52) of the secondary cylinder (50) corresponds to the reciprocal value of the boosting applied by the booster (54).

2. Electrohydraulic vehicle brake system according to Claim 1, **characterized in that** the means (44) for increasing the volume are arranged at least in the wheel brakes (24) of the front axle of a brake circuit, acting on the vehicle, of the auxiliary brake system.

3. Electrohydraulic vehicle brake system according to Claim 1 or 2, **characterized in that** the external energy (E) supplied to the booster (54) is transmitted pneumatically.

4. Electrohydraulic vehicle brake system according to one of Claims 1 to 3, **characterized in that** the vehicle brake system (10) is provided for use in special protection vehicles.

5. Electrohydraulic vehicle brake system according to one of Claims 1 to 4, **characterized in that**, in order to monitor the functional capability of the means (44) for increasing the volume, pressure sensors (66) are provided for sensing the pressure level on the input side and on the output side of the means (44).

## Revendications

1. Système de freinage électrohydraulique pour véhicule (10) comprenant une unité d'actionnement (12), un système de freinage électrohydraulique de service actionnable par force extérieure et un système de freinage auxiliaire actionnable par force musculaire, dans lequel, dans le cas du système de freinage auxiliaire, l'unité d'actionnement (12) est reliée par une vanne de coupure (28) à au moins un frein de roue (24, 26), et dans lequel le système de freinage électrohydraulique de service comprend un générateur de pression (32) à entraînement extérieur, un accumulateur de pression (34) placé en aval et une vanne d'établissement de pression de freinage (36) pouvant être commandée par un appareil de commande électronique (31) et également reliée au frein de roue (24, 26), et dans lequel une vanne de réduction de pression de freinage (38) pouvant également être commandée électronique-ment est placée hydrauliquement en aval d'un frein de roue (24, 26),
**caractérisé en ce que**
le système de freinage auxiliaire du système de freinage de véhicule (10) présente des moyens d'augmentation de volume (44) du volume de liquide de freins déplaçable par l'unité d'actionnement (12), qui sont placés hydrauliquement en aval de l'unité d'actionnement (12) du système de freinage de véhicule (10), les moyens d'augmentation de volume (44) présentent un cylindre primaire (46) avec un piston (48) plus petit au niveau du diamètre extérieur, un cylindre secondaire (50) avec un piston (52) plus grand au niveau du diamètre extérieur et un amplificateur de puissance (54) placé entre les deux cylindres (46, 50), dans lequel le piston (48) du cylindre primaire (46) actionne le piston (52) du cylindre secondaire (50) par amenée d'énergie externe (E) à l'amplificateur de puissance (54), et le rapport de surface entre le piston (48) plus petit du cylindre primaire (46) et le piston (52) plus grand du cylindre secondaire (50) correspond à la valeur inverse de l'amplification de puissance appliquée par l'amplificateur de puissance (54).

2. Système de freinage électrohydraulique de véhicule selon la revendication 1,
**caractérisé en ce que**
les moyens d'augmentation de volume (44) sont disposés au moins dans le circuit de freinage du système de freinage auxiliaire alimentant les freins de roue (24) de l'essieu avant d'un véhicule.

3. Système de freinage électrohydraulique de véhicule selon la revendication 1 ou 2,
**caractérisé en ce que**
la transmission de l'énergie externe (E) amenée à l'amplificateur de puissance (54) se fait par voie pneumatique.

4. Système de freinage électrohydraulique de véhicule selon l'une quelconque des revendications 1 à 3,
**caractérisé en ce que**
le système de freinage de véhicule (10) est prévu pour être mis en oeuvre dans des véhicules de protection spéciaux.

5. Système de freinage électrohydraulique de véhicule selon l'une quelconque des revendications 1 à 4,
**caractérisé en ce que**
pour surveiller le bon fonctionnement des moyens d'augmentation de volume (44) des capteurs de pression (66) sont prévus pour détecter le niveau de pression côté entrée et côté sortie des moyens (44).
